# EUROPEAN PATENT SPECIFICATION

(11) **EP 2 976 217 B1**
(45) Date of publication and mention of the grant of the patent: **15.12.2021**
(21) Application number: 14712649.4
(22) Date of filing: 21.03.2014
(51) Int. Cl.: B32B 5/26, B32B 25/10

(54) **COMPOSITE MATERIAL**
VERBUNDSTOFFMATERIAL
MATÉRIAU COMPOSITE

(30) Priority: 22.03.2013 GB 201305325
(43) Date of publication of application: 27.01.2016
(73) Proprietor: Hexcel Composites Limited, Duxford, Cambridgeshire CB22 4QD (GB)
(72) Inventor: ELLIS, John, Duxford Cambridgeshire CB22 4SF (GB); HADLEY, Philip, Ely Cambridgeshire CB6 3WL (GB)
(74) Representative: TLIP Limited
(86) International application number: PCT/EP2014/055749
(87) International publication number: WO 2014/147243

(56) References cited:
- WO-A1-2010/079319
- WO-A1-2012/089884
- JP-A- H11 270 609
- JP-A- 2006 192 629
- US-A- 5 368 916
- US-A1- 2010 025 147
- US-A1- 2010 170 746
- US-A1- 2012 034 833
- US-A1- 2014 011 006

## Description

The present invention relates to fibre reinforced composite materials exhibiting acoustic or vibration damping properties, particularly but not exclusively for use in automatic tape lay-up or automatic fibre placement systems and the manufacture of the aforesaid materials.

### Background

Fibre reinforced composite materials, in particular carbon fibre reinforced epoxy resins, are used in aerospace applications due to their low weight and high strength compared to metals. There is thus a trend towards an increasing use and gradual replacement of the traditional metallic structure. As a result, ever greater areas of aircraft are being produced from composite materials. Consequently, the labour required to lay down composite material is becoming an increasing cost and time burden on the manufacture of such structures. As a result structural layers tend to be laid down in an automated manner by means of a so-called automatic tape lay-up apparatus, or ATL. A typical ATL machine requires a roll of material which may be a fibre layer pre-impregnated with resin, which is loaded onto a spool and fed via a system of rollers to the ATL head. Typically the route will involve a cutting stage and an optional heating stage. The cutting stage ensures that the dimensions of the material are exactly as required, as any deviation can result in an unacceptable finish. At the head of the ATL there are normally two application methods, the "shoe" or the "compaction roller" of the ATL head. Both the shoe and the compaction roller methods apply a pressure to the upper surface of the composite material to reduce the porosity of the layup. The shoe is typically a flat surface that presses on the composite material across its surface compacting it, whereas the roller imparts a compaction force to the composite material by rolling across the composite material surface. Whichever method is employed the material is brought down into contact with the surface and pressure is applied onto an uppermost backing sheet of release paper. The tacky lowermost surface adheres under the pressure and the backing sheet is removed automatically. During an ATL process, the prepreg and its backing layer are exposed to very high tensions of between 0.15 and 1 N/mm of product width. Automatic fibre placement, or AFP, operates with a similar principle to ATL but with a significantly narrower tape width. Following the lay-up procedure the arrangement is cured by exposure to elevated temperature, and optionally to elevated pressure, to produce a cured composite material.

In order to reduce noise and vibration, damping layers and other devices such as constrained layer damping panels can be added to the aircraft interior. This incurs significant costs in terms of materials, labour and additional weight on the aircraft; these can be significant especially as large volumes are needed to provide adequate noise attenuation. Composite materials have a high stiffness and low weight and thus typically have low inherent damping qualities, therefore there is a need to increase the noise damping of composites.

US2010/170746 discloses a composite material comprising a nonwoven layer having a viscoelastic interleaf, which may be positioned mid-ply therein.

WO2012/089884 discloses a structure of composite material, comprising a continuous first layer of composite material, a second layer of viscoelastic material and a continuous impactprotection third layer. The first layer is formed by structural components in the form of a matrix and fibres. The second layer of viscoelastic material is added on top of the first layer and said second layer can be continuous or non-continuous.

The object of the present invention is to introduce a constrained damping layer into the composite lay-up, thus saving the weight and cost of a CLD panel.

### Summary of the invention

According to the present invention, there is provided a composite material and a method for producing such, as defined in any one of the accompanying claims.

The present invention provides a damped composite material comprising a damping material, a bonding material and a structural layer which comprises fibres and a structural resin material, wherein the structural layer is a prepreg or semi-preg, the damping material comprises a viscoelastic material, and the bonding material consist of a thermosetting resin film with areal weight of 1 to 50g/m²; and further wherein the bonding material is on the first face of the damping material and increases adhesion between the damping material and the structural layer; and further wherein the second face of the damping material comprises a surface layer consisting of a thermosetting resin film having an areal weight of 6 to 10 g/m².

The present invention further provides a method for producing a damped composite material of the invention comprising:
a structural layer comprising fibres and a structural resin material, wherein the structural material is prepreg or a semi-preg;
a damping material comprising a viscoelastic material;
a bonding material comprising a thermosetting resin film with areal weight of 1 to 50g/m²;
and a surface layer consisting of a thermosetting resin film having an areal weight of 6 to 10 g/m².;
   comprising the steps of:
   a) combining a bonding material with a first face of the damping material;
   b) combining the bonding material and first face of the damping material with the structural layer;
   c) combining the surface layer with the second face of the damping material.

A viscoelastic damping material embedded within the fuselage skin of an aircraft would typically encounter temperatures of as low as -50°C. Thus a material that will achieve the required damping properties at service temperature will be highly deformable at room temperature and thus is not compatible with the high tensions used in ATL layup. Furthermore, the production methods employed in the production of existing materials also involve high tensions and pressures again unsuited for damping materials. There is therefore a need to overcome these limitations and provide an ATL compatible viscoelastic damping material and a method of producing such.

Damping materials are highly elastic at room temperature, and readily deform when handled. When a damping material or damping layer is applied to a structural layer using conventional means such as passing through a consolidating roller, the roller applies a force on the damping material causing it to deform significantly. Once the damping material has passed through the consolidating roller and is adhered to the structural layer the damping material will relax into its original shape resulting in an unacceptable distortion the structural layer. In the present invention, the use of a bonding material between the damping material and structural layer increases the adhesion between them. This reduces the force necessary to apply the damping material to the structural layer, and in turn reduces the tension in the damping material, thereby eliminating any unwanted deformation of the structural layer. It is necessary to apply the damping material with sufficient adhesion so the damping material remains intact during deposition by ATL, this can be achieved by increasing the adhesion between layers through the use of a bonding material.

The bonding material is a thermoset resin having areal weight of from 1 g/m² to 50 g/m², or more preferably 4-30 g/m², or more preferably 6-20 g/m² or more preferably still, 6-10 g/m².

The thermosetting resin of the bonding material may be selected from those conventionally known in the art for use in composite manufacture, such as resins of phenol- formaldehyde, urea-formaldehyde, 1,3,5-triazine-2,4,6-triamine (melamine), bismaleimide, epoxy resins, vinyl ester resins, benzoxazine resins, polyesters, unsaturated polyesters, cyanate ester resins, or mixtures thereof. Particularly preferred are epoxy resins, for example mono functional, difunctional or trifunctional or tetrafunctional epoxy resins. Preferred difunctional epoxy resins include diglycidyl ether of Bisphenol F (e.g. Araldite GY 281), diglycidyl ether of Bisphenol A, diglycidyl dihydroxy napthalene and mixtures thereof. A highly preferred epoxy resin is a trifunctional epoxy resin having at least one meta- substituted phenyl ring in its backbone, e.g. Araldite MY0600. A preferred tetrafunctional epoxy resin is tetraglycidyl diamino diphenylmethane (e.g. Araldite MY721).

A blend of di- and tri functional epoxy resins is also highly preferred. The thermosetting resin may also comprise one or more curing agent.

Suitable curing agents include anhydrides, particularly poly carboxylic anhydrides; amines, particularly aromatic amines e.g. 1,3-diaminobenzene, 4,4'-diaminodiphenylmethane, and particularly the sulphones, e.g. 4,4'-diaminodiphenyl sulphone (4,4' DDS), and 3,3'-diaminodiphenyl sulphone (3,3' DDS), and the phenol- formaldehyde resins. Preferred curing agents are the amino sulphones, particularly 4,4' DDS and 3,3' DDS.

The bonding material resin may be applied to the damping material before being brought into contact with the structural layer. This advantageously reduces the deformation of the damping material as it passes through the consolidating rollers by providing additional constraint.

In an alternative embodiment the bonding material resin can be applied to the structural layer before being brought into contact with the structural layer. The application of bonding material resin will increase the resin content of the composite material, therefore it is preferable to reduce the quantity of structural resin accordingly.

In an embodiment the bonding material may contain additives to improve the properties of the resin material. These may include flow control additives, UV absorbers, fillers e.g. silica, talc, mica, graphite, conductive particles, e.g. carbon, graphite or metal particles or, filaments, pigments, flame retardants, tougheners e.g. core-shell rubbers and processing agents. In particular, additives to enhance the adhesion between the damping material and structural later may be selected.

In an embodiment the bonding material may comprise the same resin as the structural resin. The structural layer can be formed with sufficient structural resin on the bonding surface to comprise a bonding material and achieve a suitable adhesion between the damping layer and structural layer and provide the necessary reduction of roller force. A suitable adhesion is regarded as when the damping material can be adhered to the structural layer without causing visible distortion of the structural fibres, and the damping material does not visibly detach during ATL layup.

In an embodiment the thickness of the bonding material is selected to prevent distortion of the damping material upon application to the structural layer. The bonding material is preferably applied as a layer to either the damping material or the structural layer. The layer of bonding material has sufficient thickness to achieve the required adhesion between the structural layer and damping material in the assembled damped composite material. Preferably the bonding material is applied with a thickness of from 0.05 mm to 1 mm, or preferably from 0.1 mm to 0.5 mm.

In a preferred embodiment the bonding material provides an adhesion with a range of 0.1 to 0.2 when measured according to the Dubois test described below, additionally the adhesion between the structural layer and the damping material prior to curing is between 0.1 and 0.45.

Adhesion can be measured in relation to a material in accordance with the method disclosed in "Experimental analysis of prepreg tack" Dubois et al. (LaMI)UBP/IFMA, 5 March 2009. However a preferred way of measuring tack is as follows.

The tack of a material is measured using the Texture Analyser test method. The method requires a sample of material measuring 15 mm by 15 mm to be securely fixed to the test table of a TA.XT Plus Texture Analyser tack measurement device as supplied by Stable Micro Systems, UK. The Texture Analyser comprises a cylindrical stainless steel probe of 6 mm diameter which is pressed onto the surface of a material with a force of 10 N for 30 seconds. The probe is then withdrawn vertically to a distance of 10 mm at a rate of 0.5 mm/s. A load cell connected to the probe records the peak force of adhesion. The Texture Analyser test method is conducted in an environment at a constant temperature of 23°C, ensuring the probe and samples are also at that temperature.

In an embodiment the damped composite is simultaneously assembled and deposited by a single ATL unit. A structural layer is first deposited onto a mould surface by the roller in the head of the ATL unit. A damping material is then immediately deposited onto the structural layer using an additional roller integrated into the same ATL head. The damping material of this embodiment comprises a bonding material to promote adhesion between the structural layer and a surface layer for surface tack. The backing of the bonding material is removed before deposition on the structural layer and the surface layer backing is preferably removed after deposition to shield the damping material from tension from the ATL roller. Optionally the damping material and the structural layer can be stored on the same roll, separated by their respective backing layers and separated prior to deposition. Embodiments of this nature are advantageous in that once the structural layer is deposited by the ATL the mould surface constrains the fibres preventing any tension in the damping material from disrupting their alignment.

As discussed above, damping materials are made of materials that are soft at room temperature, therefore they are often provided with a powder coating to prevent the damping material from adhering to itself during storage. Typically talc is used for this purpose and can be regarded as a contaminant. In an embodiment of the present invention the powder can be removed from damping material by passing through a solvent bath prior to use. In an alternative embodiment the increased complexity of a solvent bath is overcome by use of the bonding material or layer, such that it is applied to the damping material to encapsulate the powder and thus isolating it from the structural layer, whilst providing sufficient adhesion between the damping material and the structural layer.

In an alternative embodiment of the present invention the powder coating of the damping layer comprises a powder that is reactive with the bonding material and/or structural material resin. Preferably the powder comprises a resin or curing agent. This for example, may be a crystalline epoxy, a crystalline curative, or a ground cured resin. The reactive powder coating enables the damping material to be rolled without sticking to itself and it becomes incorporated into the matrix during cure forming bonds therewith.

The damping material comprises a viscoelastic material, which may be a thermoplastic, polyurethane or other highly damped polymer including acrylic or latex rubber, styrenebutadiene rubbers, isoprene, chloroprene or isobutylene derived rubbers or copolymers thereof. Preferably the damping material comprises a vulcanised rubber. Exemplary damping materials include Smactane, Smacwrap and Smacwrap ST (Smac, Toulon, France).

In an embodiment the damping material is a continuous sheet with a thickness of 0.05 to 1 mm, or preferably 0.05 to 0.5 mm, or preferably 0.3 to 0.1 mm, or more preferably 0.1 to 0.2 mm, or more preferably still either 0.1, 0.12 or 0.2 mm and/or combinations of the aforesaid ranges.

In an embodiment the damping material is a continuous sheet with an areal weight of 50 to 1400 g/m², or preferably 75 to 950 g/m², or preferably 100 to 300 g/m², or more preferably still 110 to 240 g/m² and/or combinations of the aforesaid ranges.

In an embodiment the damping material when assessed with ASTM D1456 - 86 (2010) standard test method has a maximum elongation between 300 and 800 %, or more preferably between 400 and 600 %, or more preferably still between 450 and 500 %.

The elongation of the damping material can also be measured by using the vertical suspension test method described herein. The vertical suspension test method is the preferred method of measuring elongation for the purposes of this application. The elongation of a damping material is measured by vertically suspending a section of the damping material of size 30 x 150 x 0.1 mm and applying masses to the bottom end of the material. Masses of 0.5 N are then applied sequentially until a total of 5 N is reached. The elongation as a percentage of the initial non-deformed length can be measured with each increase of mass. The resulting elongation is measured using an appropriate measurement system, for example, a ruler suspended parallel to the damping material. The damping material of the invention preferably exhibits elongation with an applied mass of 1.5 N of from 10 to 30 %, or more preferably from 18 to 27 %. With an applied mass of 3 N the damping material preferably exhibits elongation of from 45 to 60 %, or more preferably from 47 to 55 %. With an applied mass of 4.5 N the damping material preferably exhibits elongation of from 120 to 160 % or more preferably from 125 to 145 %.

In an embodiment the surface layer may comprise the same resin as the structural resin or be selected from any resin suitable for use as the structural resin. Increasing tack assists adjacent layers of material to be held together during lay-up. An additional resin layer may also enable another layer of fibrous reinforcement to be attached to the moulding material. It is preferable that a composite material tape has at least one tacky surface to be compatible with ATL systems.

Embodiments of the present invention tested with the Texture Analyser test method as herein before discussed exhibit a peak force of adhesion of from to 2 to 25 N, or more preferably from 5 to 20 N, or more preferably from 10 to 20 N, or more preferably still from 5 to 10 N and/or combinations of the aforesaid ranges.

In an embodiment, the damping material is a non-perforated continuous sheet, therefore once applied to the structural layer no resin will be present on that surface, hence a tackifying layer may be added. The damping material is preferably impervious and/or continuous when in a non-deformed state. Slitting or other discontinuities in a damping material may reduce its noise attenuation properties when incorporated into a cured laminate, thus the use of a damping layer which is not perforated or slit when in a non-deformed state is preferable

In an alternative embodiment the damping material or layer can be perforated to allow resin to migrate from the bonding material or structural layer to the surface of the damping layer, thus providing a tacky surface.

In an embodiment the surface layer and/or bonding layer may comprise a curable rubber, for example a rubber comprising any of the monomer units butyl, chlorobutyl, isoprene, chloroprene, butadiene, styrene and acrylonitrile and/or combinations, blends or copolymers of the aforesaid rubbers. Such rubbers typically have sufficient tack to function as a bonding or surface layer. Their viscoelastic properties will also further contribute to the damping performance of the composite material.

Where the damped composite material is used for ATL and especially for AFP deposition, there are a series of discontinuities or gaps in the damping layer across the laminate as laid up. These discontinuities result from the cutting of the damping layer to ATL or AFP widths. The use of a curable rubber as the structural and/or bonding layer during cure fills the discontinuities or gaps between adjacent tape lengths where the damping layer has been slit. This produces a continuous layer of rubber material across the laminate structure and thus improves damping. Exemplary curable rubbers for use as the surface layer and/or bonding layer include those disclosed in WO2010/079319.

In an embodiment, the surface layer can be applied to the damping material by way of resin film, spray deposition or a solvent bath. In an embodiment the use of a resin film is preferred.

In an embodiment, the surface layer comprises a backing sheet. The surface layer may be a resin film on backing paper which is then applied to the damping material before it is adhered to the structural layer. The backing layer remains on the surface of the damping material as it is adhered to the structural layer via consolidating rollers.

The backing layer material is selected such that it is stiffer than the damping material and can withstand the tension of the consolidating roller, thus shielding the damping material and reducing its distortion as it passes through the rollers.

The structural layer comprises a structural resin and structural fibres. The structural fibres may comprise synthetic or natural fibres or any other form of material or combination of materials that may be combined with the structural resin composition. Exemplary fibres include glass, carbon, graphite, boron, ceramic and aramid. Preferred fibres are carbon and glass fibres. Hybrid or mixed fibre systems may also be envisaged. The weight of fibres within the fibrous reinforcement is generally 20-10000 g/m², preferably 50 to 800-2500 g/m², even more preferably from 1200 to 2400 g/m² and especially preferably from 150 to 600 g/m² and/or combinations of the aforesaid ranges. The number of carbon filaments per tow can vary from 3000 to 100,000, again preferably from 6,000 to 80,000 and most preferably from 12,000 to 40,000 and/or combinations of the aforesaid ranges. The tows employed in the present invention are made up of a plurality of individual filaments. There may be many thousands of individual filaments in a single tow. The tow and the filaments within the tow are generally unidirectional with the individual filaments aligned substantially parallel. Typically the number of filaments in a tow can range from 2,500 to 10,000 to 50,000 or greater. Typically the fibres will have a circular or almost circular cross-section with a diameter for carbon in the range of from 3 to 20 µm, preferably from 5 to 12 µm. For other fibres, including glass, the diameter may be in the range of from 3 to 600 µm, preferably from 10 to 100 µm. The tows are preferably unidirectional, wherein the tows are substantially parallel and aligned in the direction of production.

The structural resin is preferably a thermoset resin. The thermosetting resin may be selected from those conventionally known in the art for use in composite manufacture, such as resins of phenol- formaldehyde, urea-formaldehyde, 1,3,5-triazine-2,4,6-triamine (melamine), bismaleimide, epoxy resins, vinyl ester resins, benzoxazine resins, polyesters, unsaturated polyesters, cyanate ester resins, or mixtures thereof. Particularly preferred are epoxy resins, for example mono functional, difunctional or trifunctional or tetrafunctional epoxy resins. Preferred difunctional epoxy resins include diglycidyl ether of Bisphenol F (e.g. Araldite GY 281), diglycidyl ether of Bisphenol A, diglycidyl dihydroxy napthalene and mixtures thereof. A highly preferred epoxy resin is a trifunctional epoxy resin having at least one metasubstituted phenyl ring in its backbone, e.g. Araldite MY 0600. A preferred tetrafunctional epoxy resin is tetraglycidyl diamino diphenylmethane (e.g. Araldite MY721).

A blend of di-and tri functional epoxy resins is also highly preferred. The epoxy resin used in this invention is polyfunctional that is it has functionality of at least 2, preferably a functionality of 3 or 4. It preferably has a high reactivity as indicated by an EEW in the range from 100 to 1500 preferably an EEW in the range of from 100 to 250.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the trade names MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the trade name ELM-120.

Tetrafunctional resins are preferred resins for use as the multifunctional resin for the formulation of this invention and suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), Araldite ECN 1299 and Araldite MY9512 (from Huntsman Advanced Materials).

The formulation of this invention may also include other epoxy resins such as novolac resins, phenolic end capped bisphenol A resin. Suitable resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof. An example of a suitable resin is Araldite EP820.

The curing agents assist the curing of the formulation of the present invention by crosslinking of the epoxy resin groups and other ingredients in the formulation. The amount of curing agents and/or curing agent accelerators present in the formulation ranges from about 1% by weight to about 15% by weight and more typically from about 2 to about 12 wt %. The curing agent materials can be selected from aliphatic or aromatic amines or their respective adducts, amidoamines, polyamides, cycloaliphatic amines, anhydrides, polycarboxylic polyesters, isocyanates, phenol-based resins (e.g., phenol or cresol novolak resins, copolymers such as those of phenol terpene, polyvinyl phenol, or bisphenol-A formaldehyde copolymers, bishydroxyphenyl alkanes or the like), dihydrazides, sulfonamides, sulfones such as diamino diphenyl sulfone, anhydrides, mercaptans, imidazoles, ureas, tertiary amines, BF3 complexes or mixtures thereof. Particular preferred curing agents include modified and unmodified polyamines or polyamides such as triethylenetetramine, diethylenetriamine tetraethylenepentamine, cyanoguanidine, dicyandiamides and the like.

An accelerator for the curing agents (e.g., a modified or unmodified urea such as methylene diphenyl bis urea commercially available as urones, an imidazole, blocked amine or a combination thereof) may also be provided for preparing the formulation. Sulfones such as the amino aromatic sulfones particularly diamino diphenyl sulfone are preferred curatives when the prepregs based on glass fibre and is used for lamination to metal foil as the adhesion to the metal foil is good and the retention of the Tg of the cured resin under wet or humid conditions is also good and the moisture uptake is low. The formulation may contain other additives such as flexibilizers, impact modifiers, polymers or copolymers fillers and other elongation promoting additives.

The structural fibres are impregnated with the structural resin material to form the structural layer, the fibres are fully impregnated, i.e. pre-preg or partially impregnated i.e. a semi-preg. The viscosity of the resin and the method employed for impregnation are selected to achieve the desired degree of impregnation. The degree of impregnation can be assessed using the water pickup test. In order to increase the rate of impregnation, the process may be carried out at an elevated temperature so that the viscosity of the resin is reduced. However it must not be so hot for a sufficient length of time that curing of the resin is too far accelerated. The relative amount of resin to reinforcement material, the impregnation line speed the viscosity of the resin and the density of the multifilament tows should be correlated to achieve the desired degree of impregnation between the tows. Thus, the impregnation process is preferably carried out at temperatures in the range of from 40°C to 110°C more preferably 60°C to 80°C. It is preferred that the resin content of the prepregs is such that after curing the cured moulding material contains from 30 to 40 wt %, preferably 31 to 37 wt % more preferably 32 to 35 wt % of the resin. Fibre tows may also be pulled through a resin, these may then be assembled into the structural layer of the present invention. The resin may be spread onto the external surface of a roller and coated onto a paper or other backing material to produce a layer of curable resin. The resin composition can then be brought into contact with the multifilament tows for impregnation perhaps by the passage through rollers. The resin may be present on one or two sheets of backing material, which are brought into contact with one or both sides of the tows and consolidated such as by passing them through heated consolidation rollers to cause the desired degree of impregnation. Alternatively, the resin may be applied via a resin bath by conducting the tows through the resin (direct fibre impregnation). The resin may also comprise a solvent which is evaporated following impregnation of the fibre tows.

In a further embodiment, during impregnation the resin may be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The fibre tows may then be placed into the resin and optionally a second resin layer may be provided on top of the fibre tows and then consolidated or the backing sheet removed and a second fibrous layer applied to the to the other surface of the resin layer.

Automatic tape lay-up devices typically employ a roll of material prepared specifically for the apparatus. Thus, the composite material is preferably sufficiently flexible so as to be able to form a roll with a diameter of less than 20 cm, preferably less than 10 cm. Known automatic lay-up apparatus requires the roll to satisfy particular dimensions. Thus, the roll is either wound onto a 254 mm or 295 mm inside diameter core within a tolerance of ±0.5 mm. As such, the composite material is preferably not so thick that it cannot easily be rolled. Thus typically the composite material has a thickness of from 0.5 to 5.0 mm, preferably from 0.5 to 4.0, most preferably from 1.0 to 3.0 mm. The roll can be cut to standard ATL or AFP sizes which include 600 mm (24"), 300 mm (12"), 150 mm (6"), 75 mm (3"), 50 mm (2"), 25 mm (1"), 6.34 mm (¼") and 3.18 mm (1/8") in width, and cut within a tolerance of ± 0.050 mm.

Once prepared, the tapes of material may be deposited on a mould surface by use of an ATL or AFP system to form a lay-up or stack, the material of the present invention may be incorporated with other prepreg tapes or dry fibre tapes. The prepreg stack may be cured by exposure to an elevated temperature, and optionally elevated pressure, to produce a cured composite material. This may be achieved by use of an auto clave, infusion or oven optionally with the addition of vacuum bagging.

There is disclosed herein a process of curing the thermosetting resin of the damped composite material when incorporated into a stack as described herein, the process involving exposing the prepreg or prepreg stack to a temperature sufficient to induce curing of the thermosetting resin composition. The curing process may be carried out at autoclave pressure of up to 14.0 bars absolute, preferably up to 8 bar absolute. In an alternative embodiment the curing process is out of autoclave and a pressure of less than atmospheric pressure is used in conjunction with vacuum bagging. The curing process may be carried out at one or more temperatures in the range of from 120 to 260°C, preferably from 180 to 220 °C, preferably from 100°C to 160°C, more preferably from 160 to 210°C for a time sufficient to cure of the thermosetting resin composition to the desired degree. Curing can be achieved in combination with the so-called vacuum bag technique. This involves placing the prepreg or prepreg stack in an air-tight bag and creating a vacuum on the inside of the bag. This has the effect that the prepreg stack experiences a consolidation pressure of up to atmospheric pressure, depending on the degree of vacuum applied. Once cured, the prepreg or prepreg stack becomes a composite material, suitable for use in a structural application, for example in the skin of an aeroplane fuselage or on other vehicles including cars. A cured prepreg of the invention is particularly suited in aircraft applications where acoustic and vibrational damping is required, for example on an aircraft employing open rotor propulsion whereby the interior of the aircraft would typically experience increased vibrational and acoustic noise.

The invention will now be clarified by way of example only and with reference to the following drawings in which:
Figure 1 is a diagrammatic view of a damped composite material according to an embodiment of the invention;
Figure 2 is a diagrammatic view of a process for producing a damped composite material according to an embodiment of the invention;
Figure 3 is a is a diagrammatic view of a process for producing a damped composite material according to an embodiment of the invention; and
Figure 4 is a diagrammatic view of a process for producing a damped composite material according to an embodiment of the invention.

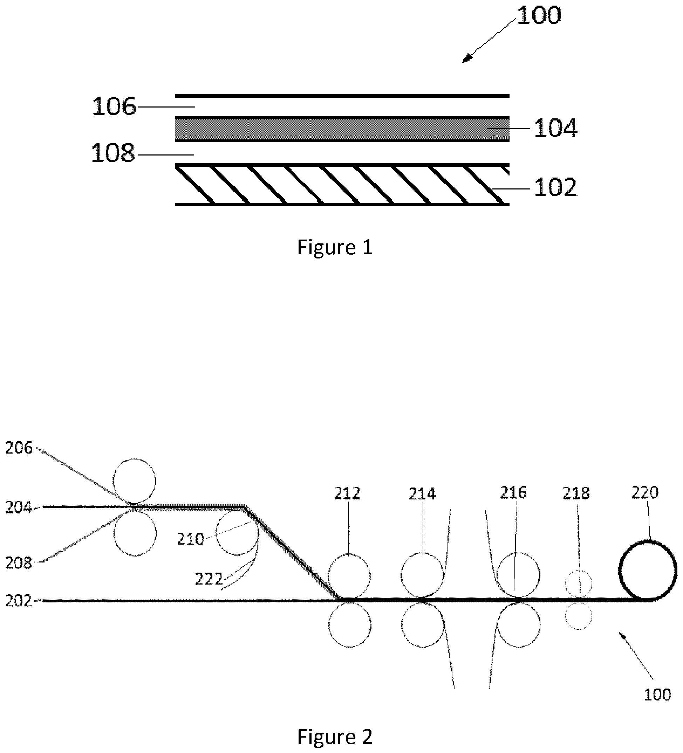

Figure 1 shows an embodiment wherein a damped composite material (100) wherein a damping material (104) is adhered to a face of a structural layer (102) with the use of a bonding material (108), and a tackifying surface layer which comprises a resin film of 6-10 g/m² (106) is on the opposing face of the damping material. The structural layer comprises reinforcing fibres and a structural resin material. The damped composite material is cut into specific widths and rolled onto a spool. The spool is then loaded on to an ATL or AFP machine depending on its width, which deposits the composite material automatically onto a mould surface. The damped composite material may be deposited on a mould surface before successive layers of the same or different composite materials are deposited on its surface, thus the damped composite material is positioned in the outer most layer in stack. Alternatively the damped composite material may be deposited at any position within a lay-up or used in successive layers. Once the damped composite material has been incorporated into a lay-up, the lay-up is typically vacuum bagged and cured in an autoclave to produce a damped composite component with integrated constrained layer damping. Figure 2 shows an embodiment wherein a damped composite material (200) is produced by first applying a bonding material (208) and a surface layer (206) to a damping material (204) using consolidation rollers. The bonding and surface layers comprise resin films with a paper backing.

The paper backing (222) is removed from the bonding material (210) before being brought into contact with the structural layer (202). The assembly then passes through consolidating rollers (212), the force of which has been reduced from that of a typical process due to the increased adhesion provided by the bonding material. In addition the backing layer of the surface layer shields the damping material from any tension caused by the rollers (212), thus preventing any distortion of the structural layer. Following consolidation the backing paper is removed from both surfaces (214) and a polyethylene sheet is added (216) to facilitate slitting into tape widths that are ATL compatible (218) and then wound onto rolls for storage and transportation (220). The composite material (200) is applied by an ATL or AFP machine in the same manner as the material (100) as described above.

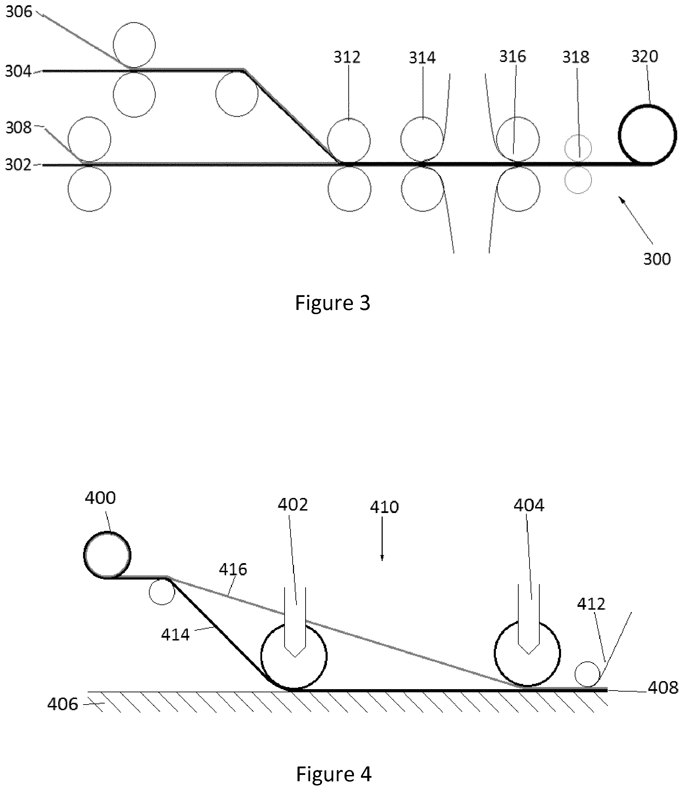

Figure 3 shows an embodiment wherein a damped composite (300) is produced by first applying a bonding material (308) to the structural layer (302), the damping material (304) is then brought into contact with the bonding material using consolidating rollers (312). The surface layer is preferably applied prior to application of the damping material to the structural layer, but can also be applied following application. The composite material (300) is applied by an ATL or AFP machine in the same manner as the material (100) as described above.

Figure 4 shows an embodiment wherein a damped composite (408) is simultaneously assembled and deposited on-line by ATL (410). Firstly a structural layer is deposited by the roller (402) in the head of an ATL system (410) onto a mould surface (406), immediately after deposition its backing layer is removed (not shown). A damping material is then deposited onto the structural layer using an additional roller integrated into the same ATL head (404) forming the damped composite (408). The damped material comprises a bonding and a surface layer both with paper backing. The bonding material backing is preferably removed before deposition (not shown) to expose the bonding material and enhance bonding with the structural layer. The surface layer backing (412) is preferably removed after deposition, so that it shields the damping material from the tension applied to it by the ATL roller. Optionally the damping material (416) and the structural layer (414) can be stored on the same roll (400), separated by their respective backing layers (400).

The invention is illustrated by reference to the following examples Comparative Example 1

Two 10 g/m² backed resin films (M21EV, Hexcel Composites, France) were applied to both surfaces of a roll of 0.1 mm Smacwrap ST (SMAC, France). The films were applied using two successive pairs of 30 cm (12") consolidation rollers applying each film sequentially. The roll was then cut into ATL compatible widths to form a tape of 3.2mm width.

The tape was successfully deposited onto a mould surface using an ATL layup head, thus demonstrating that the above comparative example is suitable for use in ATL apparatus.

### Example 2

Smacwrap^{®} ST (supplied by SMAC SA, France) of 0.1 mm thickness was laminated to M21EV/34%/194/IMA prepreg (Hexcel Composites SA, France) using a pair of 12" consolidation rollers. The prepreg had sufficient surface resin to tack the Smacwrap^{®} onto prepreg. A tackifying film of 10 g/m² backed film resin (M21EV, Hexcel Composites, France) was laminated onto the exposed surface of the Smacwrap layer using a further set of 30 cm (12") consolidation rollers. The composite material was then cut into ATL compatible tape widths of 3.2mm widths.

The tack of the final product was examined using the Texture Analyser method described above at a temperature of 23°C and found to have a mean peak adhesion force of 6.5 N.

The tape was successfully deposited onto a mould surface using an ATL layup head. Subsequent layers of the tape were then applied. No obvious defects were present following visual inspection, suggesting the material of Example 2 is well suited for deposition by ATL apparatus. It was also observed that the tape of Example 2 could withstand a higher deposition rate than the tape of Comparative Example 1.

In addition to the damping prepreg of Example 2, a second batch of prepreg was made in the same manner except the damping material had been washed by immersion in water to remove any powder added to the surface of the Smacwrap^{®} material to prevent the damping layer from sticking to itself. Both damping prepregs were incorporated into an 8 ply lay-up where the fibres direction of each ply was arranged in parallel. The damping layer was incorporated between either the second and third plies or the fourth and fifth plies. In addition a control of 8 plies and no damping material was also produced in the same manner.

The lay-ups were cured at 180°C for 120 minutes at a pressure of 7 bar ramp rate of 2°C per minute. The lay ups were tested for interlaminate shear strength (ILSS) in accordance with BS EN 2563.

**Table 1. Inter laminate shear strength performance of 8-ply laminates featuring damping elements**

| Damping material position | Damping material | Mean specimen thickness (mm) | **ILSS** (MPa) |
|---|---|---|---|
| NA | M21EV control | 2.07 | 93.3 |
| Between plies 2-3 | Smacwrap | 2.19 | 75.5 |
| | Washed Smacwrap | 2.20 | 77.0 |
| Between plies 4 and 5 | Smacwrap | 2.18 | 73.7 |
| | Washed Smacwrap | 2.17 | 75.2 |

## Claims

1. A damped composite material comprising a damping material, a bonding material and a structural layer which comprises fibres and a structural resin material, wherein the structural layer is a prepreg or semi-preg, the damping material comprises a viscoelastic material, and the bonding material consisting of a thermosetting resin film with areal weight of 1 to 50g/m²; and further wherein the bonding material is on the first face of the damping material and increases adhesion between the damping material and the structural layer; and further wherein the second face of the damping material comprises a surface layer consisting of a thermosetting resin film having an areal weight of 6 to 10 g/m².

2. A damped composite material according to claim 1, wherein the damping material comprises a vulcanised rubber.

3. A damped composite material according to claim 1 or claim 2, wherein the damping material has a maximum elongation between 300 and 800 % when measured in accordance with ASTM D1456 - 86(2010) standard test method.

4. A damped composite material according to any of the preceding claims, wherein the bonding material comprises an epoxy resin.

5. A damped composite material according to any of the preceding claims, wherein the damping material is impervious and/or continuous when in a non-deformed state.

6. A damped composite material according to any of the preceding claims, wherein the damping material has a thickness of 0.1 - 0.2 mm.

7. A damped composite material according to any of the preceding claims, wherein the damping material comprises surface powder of a resin or curing agent.

8. A damped composite material according to any of the preceding claims, wherein the damping material exhibits a surface tack having a peak force of from 2 to 25 N, preferably from 4 to 10 N when measured with the Texture Analyser according to the method in the description.

9. A method for producing a damped composite material of any of the preceding claims comprising:
a structural layer comprising fibres and a structural resin material, wherein the structural material is prepreg or a semi-preg;
a damping material comprising a viscoelastic material;
a bonding material consisting of a thermosetting resin film with areal weight of 1 to 50g/m²;
and a surface layer consisting of a thermosetting resin film having an areal weight of 6 to 10 g/m².;
comprising the steps of:
a) combining a bonding material with a first face of the damping material;
b) combining the bonding material and first face of the damping material with the structural layer;
c) combining the surface layer with the second face of the damping material.

10. A method for producing a damped composite material according to claim 9 wherein the damping material is supplied with a powder coating, and the bonding material and/or surface layer are applied without removing the powder.

11. A method for producing a damped composite material according to claim 9 wherein the damping material has a backing layer, which is removed after the damping material is applied to the bonding material or surface layer.

12. A method for producing a damped composite material according to claim 9 wherein the bonding material is applied to the damping material prior to combining with the structural layer.

## Patentansprüche

1. Gedämpftes Verbundmaterial, umfassend ein Dämpfungsmaterial, ein Verbindungsmaterial und eine Strukturschicht, die Fasern und ein Strukturharzmaterial umfasst, wobei die Strukturschicht ein Prepreg oder Semipreg ist, das Dämpfungsmaterial ein viskoelastisches Material umfasst und das Verbindungsmaterial aus einem duroplastischen Harzfilm mit einem Flächengewicht von 1 bis 50 g/m² besteht; und wobei sich das Verbindungsmaterial ferner auf der ersten Seite des Dämpfungsmaterials befindet und die Haftung zwischen dem Dämpfungsmaterial und der Strukturschicht erhöht; und wobei die zweite Seite des Dämpfungsmaterials ferner eine Oberflächenschicht umfasst, die aus einem duroplastischen Harzfilm mit einem Flächengewicht von 6 bis 10 g/m² besteht.

2. Gedämpftes Verbundmaterial nach Anspruch 1, wobei das Dämpfungsmaterial einen vulkanisierten Gummi umfasst.

3. Gedämpftes Verbundmaterial nach Anspruch 1 oder Anspruch 2, wobei das Dämpfungsmaterial eine maximale Dehnung zwischen 300 und 800 % aufweist, gemessen gemäß dem Standardtestverfahren ASTM D1456 - 86(2010).

4. Gedämpftes Verbundmaterial nach einem der vorhergehenden Ansprüche, wobei das Verbindungsmaterial ein Epoxidharz umfasst.

5. Gedämpftes Verbundmaterial nach einem der vorhergehenden Ansprüche, wobei das Dämpfungsmaterial in einem nicht verformten Zustand undurchlässig und/oder durchgehend ist.

6. Gedämpftes Verbundmaterial nach einem der vorhergehenden Ansprüche, wobei das Dämpfungsmaterial eine Dicke von 0,1 - 0,2 mm aufweist.

7. Gedämpftes Verbundmaterial nach einem der vorhergehenden Ansprüche, wobei das Dämpfungsmaterial Oberflächenpulver eines Harzes oder Härtungsmittels umfasst.

8. Gedämpftes Verbundmaterial nach einem der vorhergehenden Ansprüche, wobei das Dämpfungsmaterial eine Oberflächenklebrigkeit mit einer Spitzenkraft von 2 bis 25 N, vorzugsweise von 4 bis 10 N aufweist, gemessen mit dem Texture Analyzer gemäß dem Verfahren in der Beschreibung.

9. Verfahren zur Herstellung eines gedämpften Verbundmaterials nach einem der vorhergehenden Ansprüche, umfassend:
eine Strukturschicht, die Fasern und ein Strukturharzmaterial umfasst, wobei das Strukturmaterial ein Prepreg oder ein Semipreg ist;
ein Dämpfungsmaterial, das ein viskoelastisches Material umfasst;
ein Verbindungsmaterial, bestehend aus einem duroplastischen Harzfilm mit einem Flächengewicht von 1 bis 50 g/m²;
und eine Oberflächenschicht, bestehend aus einem duroplastischen Harzfilm mit einem Flächengewicht von 6 bis 10g/m²;
umfassend die folgenden Schritte:
a) Kombinieren eines Verbindungsmaterials mit einer ersten Seite des Dämpfungsmaterials;
b) Kombinieren des Verbindungsmaterials und der ersten Seite des Dämpfungsmaterials mit der Strukturschicht;
c) Kombinieren der Oberflächenschicht mit der zweiten Seite des Dämpfungsmaterials.

10. Verfahren zur Herstellung eines gedämpften Verbundmaterials nach Anspruch 9, wobei das Dämpfungsmaterial mit einer Pulverbeschichtung versehen wird und das Verbindungsmaterial und/oder die Oberflächenschicht aufgebracht werden, ohne das Pulver zu entfernen.

11. Verfahren zur Herstellung eines gedämpften Verbundmaterials nach Anspruch 9, wobei das Dämpfungsmaterial eine Trägerschicht aufweist, die entfernt wird, nachdem das Dämpfungsmaterial auf das Verbindungsmaterial oder die Oberflächenschicht aufgebracht wurde.

12. Verfahren zur Herstellung eines gedämpften Verbundmaterials nach Anspruch 9, wobei das Verbindungsmaterial auf das Dämpfungsmaterial aufgebracht wird, bevor es mit der Strukturschicht kombiniert wird.

## Revendications

1. Matériau composite à amortissement comprenant un matériau amortisseur, un matériau de liaison et une couche structurale qui comprend des fibres et un matériau de résine structural, ladite couche structurale étant un préimprégné ou un semi-imprégné, ledit matériau amortisseur comprenant un matériau viscoélastique, et le matériau de liaison étant constitué d'un film de résine thermodurcissable avec une masse surfacique de 1 à 50 g/m² ; et en outre ledit matériau de liaison étant sur la première face du matériau amortisseur et augmentant l'adhérence entre le matériau amortisseur et la couche structurale ; et en outre ladite seconde face du matériau amortisseur comprenant une couche de surface constituée d'un film de résine thermodurcissable possédant une masse surfacique de 6 à 10 g/m².

2. Matériau composite à amortissement selon la revendication 1, ledit matériau amortisseur comprenant un caoutchouc vulcanisé.

3. Matériau composite à amortissement selon la revendication 1 ou la revendication 2, ledit matériau amortisseur possédant un allongement maximal compris entre 300 et 800 % lorsqu'il est mesuré selon la méthode d'essai standard ASTM D1456 - 86(2010).

4. Matériau composite à amortissement selon l'une quelconque des revendications précédentes, ledit matériau de liaison comprenant une résine époxy.

5. Matériau composite à amortissement selon l'une quelconque des revendications précédentes, ledit matériau amortisseur étant imperméable et/ou continu lorsqu'il est dans un état non déformé.

6. Matériau composite à amortissement selon l'une quelconque des revendications précédentes, ledit matériau amortisseur possédant une épaisseur de 0,1 à 0,2 mm.

7. Matériau composite à amortissement selon l'une quelconque des revendications précédentes, ledit matériau amortisseur comprenant une poudre de surface d'une résine ou d'un agent de durcissement.

8. Matériau composite à amortissement selon l'une quelconque des revendications précédentes, ledit matériau amortisseur présentant une adhérence de surface possédant une force maximale allant de 2 à 25 N, de préférence allant de 4 à 10 N lorsqu'elle est mesurée avec l'analyseur de texture selon le procédé de la description.

9. Procédé permettant la production d'un matériau composite à amortissement selon l'une quelconque des revendications précédentes comprenant :
une couche structurale comprenant des fibres et un matériau de résine structural, ledit matériau structural étant un préimprégné ou un semi-imprégné ;
un matériau amortisseur comprenant un matériau viscoélastique ;
un matériau de liaison constitué d'un film de résine thermodurcissable avec une masse surfacique de 1 à 50 g/m² ;
et une couche de surface constituée d'un film de résine thermodurcissable possédant une masse surfacique de 6 à 10 g/m² ;
comprenant les étapes de :
a) combinaison d'un matériau de liaison avec une première face du matériau amortisseur ;
b) combinaison du matériau de liaison et de la première face du matériau amortisseur avec la couche structurale ;
c) combinaison de la couche de surface avec la seconde face du matériau amortisseur.

10. Procédé permettant la production d'un matériau composite à amortissement selon la revendication 9, ledit matériau amortisseur étant doté d'un revêtement en poudre, et ledit matériau de liaison et/ou ladite couche de surface étant appliqués sans enlever la poudre.

11. Procédé permettant la production d'un matériau composite à amortissement selon la revendication 9, ledit matériau amortisseur possédant une couche de support, qui est retirée après que le matériau amortisseur a été appliqué au matériau de liaison ou à la couche de surface.

12. Procédé permettant la production d'un matériau composite à amortissement selon la revendication 9, ledit matériau de liaison étant appliqué au matériau amortisseur avant de se combiner avec la couche structurale.
